# EUROPEAN PATENT SPECIFICATION

(11) **EP 2 219 788 B1**
(45) Date of publication and mention of the grant of the patent: **04.06.2014**
(21) Application number: 08805479.6
(22) Date of filing: 08.10.2008
(51) Int. Cl.: B04C 5/081, B04C 5/14

(54) **CENTRIFUGAL SEPARATOR ASSEMBLY**
ZENTRIFUGALABSCHEIDEVORRICHTUNG
ENSEMBLE SÉPARATEUR CENTRIFUGE

(30) Priority: 08.10.2007 FI 20075711
(43) Date of publication of application: 25.08.2010
(73) Proprietor: Foster Wheeler Energia Oy, 02130 Espoo (FI)
(72) Inventor: LANKINEN, Pentti, FI-78200 Varkaus (FI)
(74) Representative: Salonen, Kauko Tuomas
(86) International application number: PCT/FI2008/050557
(87) International publication number: WO 2009/047386

(56) References cited:
- WO-A-2004/063626
- DD-B- 154 673
- DE-A1- 3 110 840
- DE-U1- 8 428 233

## Description

### Technical field

The invention relates to centrifugal separators for separating solid particles from the process and product gases of fluidized bed reactors, especially circulating fluidized bed reactors used for combustion or gasification of fuel material.

The invention particularly relates to a centrifugal separator assembly, comprising a polygonal separator chamber formed of planar wall sections joined with each other to provide a substantially gas tight structure and having at least four pairs of planar opposite wall sections, the chamber including a tapered portion formed by having a first inward bending in each of the wall sections, the tapered portion extending as a discharge channel for separated particles from the separator chamber, which discharge channel is formed by means of first and second pairs of opposite wall sections being perpendicular to each other according to the preamble of claim 1.

### Background art

It is known to manufacture cylindrical cyclones of a fluidized bed reactor as a cooled structure formed of parallel water tubes and having a conical bottom. To provide a water tube wall construction of cylindrical form and to connect it to the surrounding construction requires a lot of manual labour, which could be minimized by using substantially planar walls.

US2007079773 discloses a rectangular cyclone in connection with a fluidized bed reactor made of tube walls. The construction of the conical part of the cyclone is such that each of the wall sections has a decreasing width i.e. triangular shape, and the edges of thereof have been joined to the adjacent edges of the other wall section.

W02004063626 shows a heat exchange chamber having an enclosure with a tapered portion of a vertical polygonal heat exchange chamber having more than four sides with simple water tube panels in such a way that the various tapered portions may simultaneously taper inwardly in more than one horizontal direction and that the widths of all water tube panels remain substantially uniform in the tapered portions. In applications where the chamber is a cyclone separator of a fluidized bed reactor the outlet for separated solids remains considerably wide in cross sectional area. It has also been noticed that the form of tapered portions may be improved.

An object of the invention is to provide a centrifugal separator assembly, which has a tapered portion and a channel for the discharge of separated particles from the separator, and which is thus less space consuming and better adaptable to the requirements for handling the solid material in a fluidized bed reactor and its accessories.

### Disclosure of the invention

Objects of the invention are met substantially as is disclosed in claim 1. The other claims present more details of different embodiments of the invention.

According to a preferred embodiment of the invention, a centrifugal separator assembly comprises a polygonal separator chamber formed of planar wall sections joined with each other to provide a substantially gas tight structure and having at least four pairs of planar opposite wall sections, the chamber including a tapered portion formed by having a first, inward bending in each of the wall sections, the tapered portion extending as a discharge channel for separated particles from the separator chamber, which discharge channel is formed by means of first and second pairs of opposite wall sections being substantially perpendicular to each other. It is a characteristic feature of the invention that in the discharge channel for separated particles the first pair of wall sections extends into the area between the second pair of wall sections.

Thus, the distance between the first pair of opposite wall sections is less than the width of the second pair or opposite wall sections in the area of the discharge channel. Preferably the first pair or wall sections extends in tapering direction into the area between the second pair of wall sections.

This makes it possible to have a considerably small cross sectional area of the discharge channel, making the handling of separated particles straightforward.

Preferably, a gas seal arrangement and means for introducing fluidization gas are provided in connection with a lower section of the first pair of opposite wall sections. In this way, the space between the discharge for the separated particles and the gas seal in the return duct is considerably small and, thus, the amount of the accumulated solids is also small. This construction brings the benefit of having a smaller load caused by the weight of the particles to the structure.

The first pair of opposite wall sections and the second pair of opposite wall sections include a first bending and a second bending for forming the tapering portion. According to a preferred embodiment of the invention, the distance between the first and the second bendings in the first pair of wall sections is longer than the distance between the first and the second bendings in the second pair of wall sections.

Preferably each wall section has a constant width over the length of the separator chamber. This brings the benefit that all tubes in the wall section may extend through the whole length of the wall section, i.e. there is no need for tube take-out, like if the wall section were made tapering.

According to an embodiment of the invention, the first pair of wall sections is provided with symmetrical bendings. This way, the vertical space required for the tapering portion of the separator is minimized.

The wall sections preferably comprise substantially evenly spaced tubes for arranging heat transfer medium flow through the wall sections when in use.

It is advantageous that all the wall sections are of equal width. This way the construction is easier and it contributes to modularized manufacturing.

With the present invention, it is possible to construct the cyclone separator of planar walls of substantially constant width, and have substantially all tubes of the wall structure extending through the whole length.

### Brief Description of Drawings

In the following, the invention will be described with the reference to the accompanying schematic drawings, in which
Figure 1 illustrates a centrifugal separator assembly according to an embodiment of the invention,
Figure 2 illustrates a horizontal cross section II-II of figure 1,
Figure 3 illustrates a horizontal cross section III-III of figure 1,
Figure 4 illustrates a horizontal cross section IV-IV of figure 1,
Figure 5 illustrates a horizontal cross section V-V of figure 1,
Figure 6 illustrates a vertical cross section VI-VI of figure 1,
Figure 7 illustrates a centrifugal separator assembly according to another embodiment of the invention, and
Figure 8 illustrates the detail 100 in figure 1.

### Detailed Description of Drawings

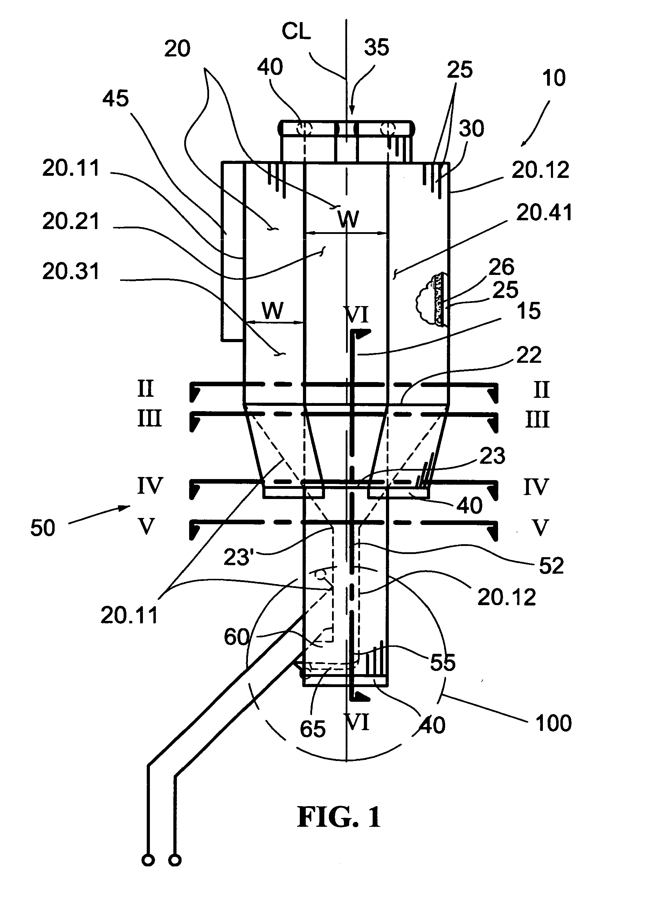

Figures 1 - 6 illustrate a centrifugal separator assembly 10 according to an embodiment of the invention. The separator assembly comprises a separator chamber 15 enclosed by planar wall sections 20. The cross section of the separator chamber is octagonal comprising four pairs of opposite wall sections 20.11, 20.12; 20.21, 20.22; 20.31, 20.32; 20.41, 20.42. The wall sections are manufactured, e.g., by joining adjacent tubes 25 with each other and spaced by a fin 30 in a manner known per se to form a gas tight construction. Preferably, each wall section has a constant width W over the length of the separator chamber 15. This way the wall sections may be easily prefabricated in a similar manner.

Each wall section is provided with manifolds 40 at its ends, to which the tubes are connected. There may be common manifolds provided for several wall sections but preferably each wall section is provided with individual manifolds (inlet and outlet). The wall sections are connected to the medium circulation of the power plant (not shown) in a manner designed case by case. Such a medium circulation is typically a steam cycle of the plant.

At the first end of the separator, which is the upper end, the adjacent wall sections 20 are bent inwardly towards the centre axis so that a gas outlet opening 35 is provided having a cross sectional area smaller than the cross sectional area of the separator chamber 15. The inner surface of the wall sections is preferably lined with suitable heat and abrasion resistant lining 26 so that the cross section of the gas space is made substantially circular or at least the corners formed when connecting the adjacent wall sections to each other are evened to make the inner surface substantially smooth.

The separator is provided with a gas inlet 45, through which hot gas and particles entrained therewith may be introduced into the gas chamber 15 of the cyclone when in use.

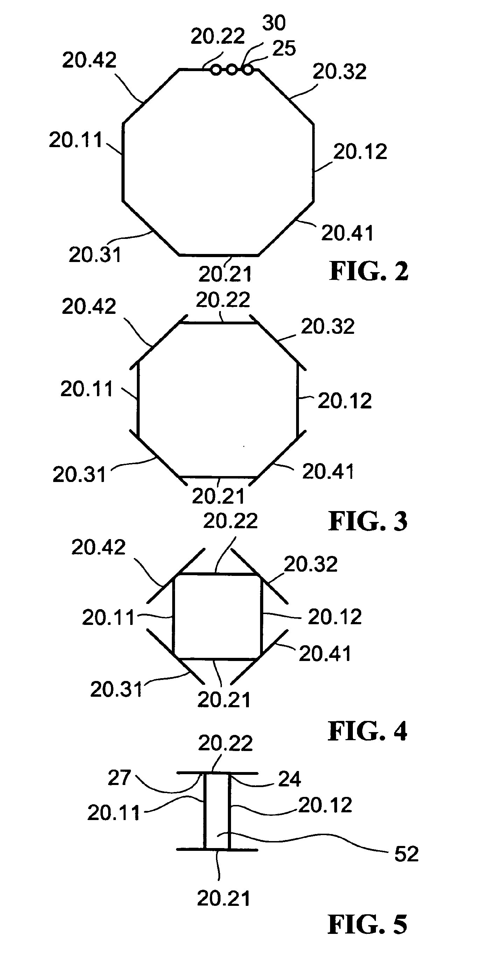

The centrifugal separator chamber assembly also includes a tapered portion 50 at its second end formed by inwardly bent portions of the wall sections 20. The tapered portion provides a transition from the octagonal cross section of the separator chamber 50 to rectangular shape of the discharge channel for separated particles. Before the first bending 22, that is in the region of the wall sections above the bending line, the cross sectional area of the chamber is octagonal as can be seen from Figure 2, which illustrates the view II-II of Figure 1. Wall section is illustrated for clarity reasons mainly by a solid line, but in practise the wall is typically manufactured of adjacent tubes 25 having a fin 30 between them.

Each wall section 20 is provided with a first bending 22 at a same longitudinal (vertical) position the bending lines being at the same level. First and second pairs of planar opposite wall sections 20.11, 20.12; 20.21, 20.22, between which third and fourth pairs of planar opposite wall sections 20.31, 20.32; 20.41, 20.42 are located, are bent towards the centre line CL of the separator chamber 15 in an angle greater than the angle in which the third and the fourth pairs of planar opposite wall sections are bent. The third and fourth pairs of wall sections are bent against the edges of the first and second pairs of wall sections to cover the wedge shaped area between them. Figure 3 shows the sectional view III-III of Figure 1 which illustrates that the first and the second pairs of planar opposite wall sections 20.11, 20.12; 20.21, 20.22 are closer to the central axis of the separator camber.

At least the first and second pairs of planar opposite wall sections 20.11, 20.12; 20.21, 20.22 are provided with a second bending 23, 23' in which the wall sections are bent again outwardly away from the centre line of the separator chamber. Figure 4 showing the view IV-IV of Figure 1 illustrates the situation just before the edges of the first and the second pairs of wall section reach each other and the second pair of wall sections 20.21, 20.22 will be provided with the second bending 23. Preferably, the wall sections before the first bending and after the second bending are on parallel planes. In other words, the areas outside the region between the bendings are on parallel planes. The distance between the first bending 22 and the second bending 23' of the first pair of wall sections 20.11, 20.12 is made longer than the distance between the first bending 22 and the second bending 23 of the second pair of wall sections 20.21, 20.22. Thus the first pair of wall sections 20.11, 20.12 extends in tapering direction into the area between the second pair of wall sections 20.21, 20.22. This is illustrated in Figure 5. The first pair of wall sections 20.11, 20.12 extends between the second pair of wall sections 20.21, 20.22 forming a rectangular channel between them. The edges 24 of the first pair of wall sections are substantially gas tightly joint to the surface 26 of the second pair of wall sections. This way the cross sectional area of the channel may be flexibly dimensioned for each application.

The first and the second pairs of planar wall sections form the discharge channel for separated particles as an extension of the tapered portion. The third and the fourth pairs of planar walls 20.31, 20.32; 20.41, 20.42 may have a second bending 23 at the same location as the second pair of wall sections, and extend further downwards but that does not effect the inner form of the tapering portion of the separator chamber.

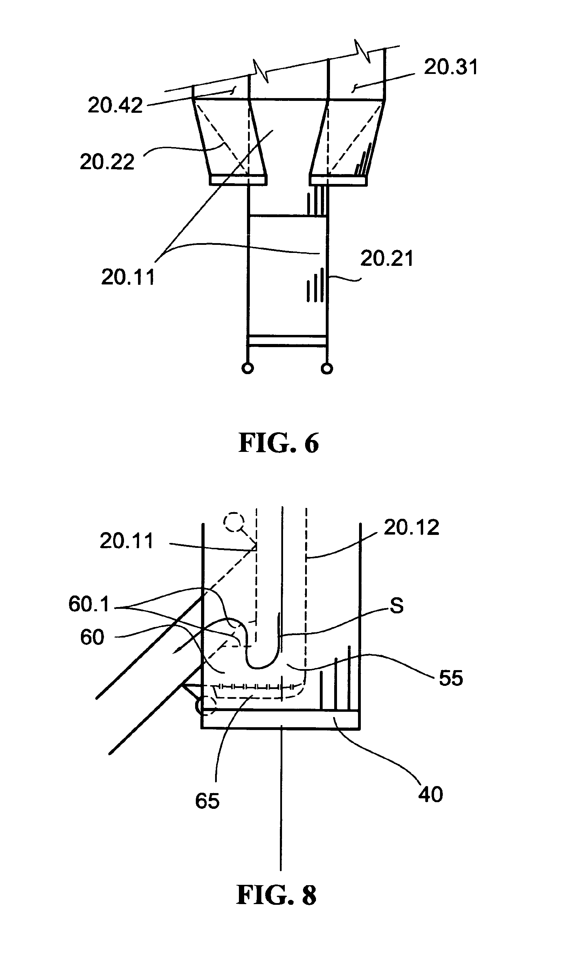

Figure 1 and Figure 6 showing the view VI-VI of Figure 1 illustrate that the first and second pairs of opposite wall sections extend further downwards from the second bending 23' of the first pair of opposite walls sections, thus forming a rectangular discharge channel 52. The first pair of wall sections 20.11, 20.12 is connected approximately at the end area thereof between the second pair of wall sections 20.21, 20.22 forming a bottom part 55. The bottom part 55 is provided with a gas seal 60 and means 65 for introducing fluidization gas in to the end area of the channel comprising a wind box and gas nozzles. The detail 100 of the bottom part 55 is shown more in detail in Figure 8. The gas seal is provided by arranging an open area to the wall section 21.11 by bending tubes 60.1 out of the general plane of the wall in a manner known per se. The flow of separated particles through the gas seal is illustrated by the arrow S in Figure 8. The height of the rectangular channel between the bottom part 55 and the tapered portion is preferably limited to a height which is sufficient to provide the operation and existence of the gas seal, which in practice means a capability to fluidize the particles in the bottom part 55.

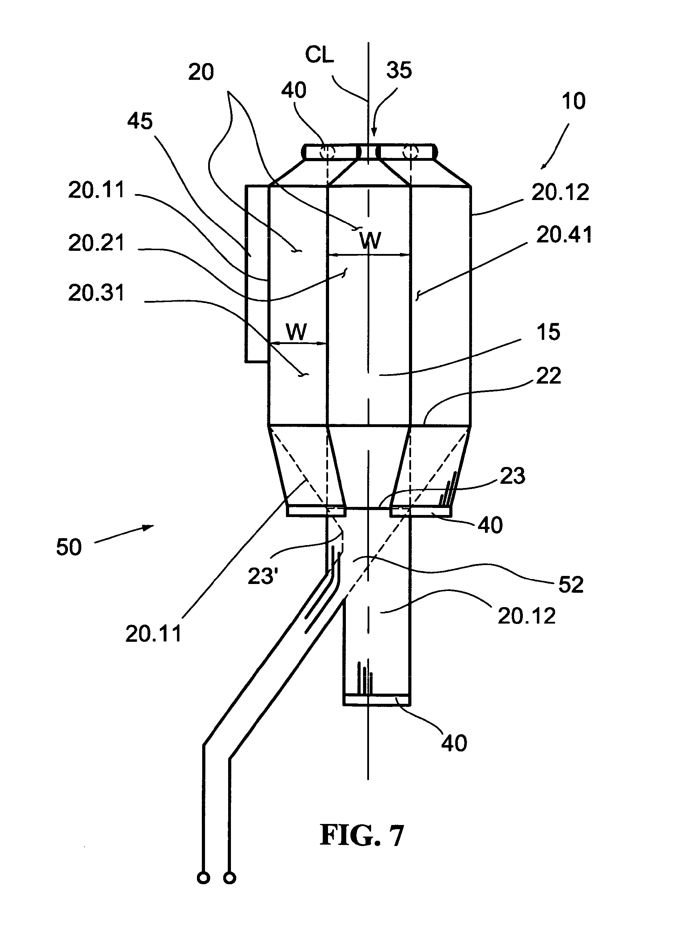

It is also possible to provide a separator without a gas seal, as shown in Figure 7. The centrifugal separator assembly 10 in Figure 7 differs from that of Figure 1 in the bendings of the first and second pairs of wall sections at their lower ends. The first pair of wall sections also forms two walls of a return duct extending, e.g., to the lower part of the fluidized bed reactor (not shown). Part of the second pair of wall sections 20.21, 20.22 forms two other walls of a return duct having the tubes bent to follow the return duct.

It is clear that the invention is not limited to the examples mentioned above but can be implemented in many different embodiments within the scope of the inventive idea. It is also clear that the details mentioned in connection with an embodiment may be used in another embodiment when feasible.

## Claims

1. A centrifugal separator assembly (10), comprising a polygonal separator chamber (15) formed of planar wall sections joined with each other to provide a substantially gas tight structure and having at least four pairs of planar opposite wall sections (20.11, 20.12; 20.21, 20.22; 20.31, 20.32; 20.41, 20.42), the chamber including a tapered portion (50) formed by having a first inward bending (22) in each of the wall sections, the tapered portion extending as a discharge channel (52) for separated particles from the separator chamber (15), which discharge channel is formed by means of first and second pairs of opposite wall sections (20.11, 20.12; 20.21, 20.22) being perpendicular to each other, **characterized in that** in the discharge channel (52) for separated particles the first pair of wall sections (20.11, 20.12) extends into the area between the second pair of wall sections (20.21, 20.22).

2. A centrifugal separator assembly (10) according to claim 1, **characterized in that** the distance between the first pair of opposite wall sections (20.11, 20.12) in the area of the discharge channel is less than the width of the second pair or opposite wall sections (20.21, 20.22).

3. A centrifugal separator assembly (10) according to claim 1, **characterized in that** a gas seal arrangement (60) and means for introducing fluidization gas (65) are provided in connection with a lower section of the first pair of opposite wall sections (20.11, 20.12).

4. A centrifugal separator assembly according to claim 1, **characterized in that** the first pair of opposite wall sections and the second pair of opposite wall sections include a second bending (23) and that the distance between the first and the second bendings (22; 23) in the first pair of wall sections (20.11, 20.12) is longer than the distance between the first and the second bendings in the second pair of wall sections (20.21, 20.22).

5. A centrifugal separator assembly according to claim 1, **characterized in that** each wall section has a constant width (W) over the length of the separator chamber.

6. A centrifugal separator assembly according to claim 1, **characterized in that** the first pair of wall sections (20.11, 20.12) extends in tapering direction into the area between the second pair of wall sections (20.21, 20.22).

7. A centrifugal separator assembly according to claim 1, **characterized in that** the wall sections of the first pair of wall sections (20.11, 20.12) are provided with symmetrical first bendings.

8. A centrifugal separator assembly according to any one of the preceding claim, **characterized in that** the wall sections comprise substantially evenly spaced tubes (25) for arranging heat transfer medium flow through the wall sections when in use.

9. A centrifugal separator assembly according to claim 1, **characterized in that** all the wall sections (20.11, 20.12; 20.21, 20.22; 20.31, 20.32; 20.41, 20.42) are of equal width (W).

10. A centrifugal separator assembly according to claim 1, **characterized in that** in the discharge channel (52) the edges (24) of the first pair of wall sections are substantially gas tightly joined to the surface (26) of the second pair of wall sections.

11. A centrifugal separator assembly according to claim 1, **characterized in that** the first bending (22) in each wall section is on the same plane.

12. A centrifugal separator assembly according to claim 1 or 2, **characterized in that** the first pair of opposite wall sections and the second pair of opposite wall sections include a second bending (23) and that the wall sections before the first bending and after the second bending are parallel.

## Patentansprüche

1. Fliehkraftabscheidereinheit (10) die eine vieleckige Abscheiderkammer (15) umfasst, die aus planförmigen Wandabschnitten gebildet ist, die zusammengefügt sind, um eine im Wesentlichen gasdichte Konstruktion bereitzustellen, und mindestens vier Paare planförmige einander gegenüberliegende Wandabschnitte (20.11, 20.12; 20.21, 20.22; 20.31, 20.32; 20.41, 20.42) aufweist, welche Kammer einen sich verjüngenden Abschnitt (50) aufweist, der dadurch gebildet ist, dass in jedem der Wandabschnitte eine erste Krümmung (22) einwärts vorgesehen ist, welcher sich verjüngende Abschnitt als Ablaufkanal (52) für abgeschiedene Partikel sich von der Abscheiderkammer (15) erstreckt, welcher Ablaufkanal mittels erster und zweiter Paare einander gegenüberliegender Wandabschnitte (20.11; 20.12; 20.21, 20.22) gebildet ist, die senkrecht zueinander stehen, **dadurch gekennzeichnet, dass** im Ablaufkanal (52) für abgeschiedene Partikel das erste Paar von Wandabschnitten (20.11, 20.12) sich in den Bereich zwischen dem zweiten Paar von Wandabschnitten (20.21, 20.22) erstreckt.

2. Fliehkraftabscheidereinheit (10) nach Patentanspruch 1, **dadurch gekennzeichnet, dass** der Abstand zwischen dem ersten Paar einander gegenüberliegender Wandabschnitte (20.11, 20.12) im Bereich des Ablaufkanals kleiner ist als die Breite des zweiten Paars einander gegenüberliegender Wandabschnitte (20.21, 20.22).

3. Fliehkraftabscheidereinheit (10) nach Patentanspruch 1, **dadurch gekennzeichnet, dass** ein Gasverschlussanordnung (60) und Mittel zur Einführung von Fluidisierungsgas (65) in Verbindung mit einem unteren Abschnitt des ersten Paars einander gegenüberliegender Wandabschnitte (20.11, 20.12) vorgesehen sind.

4. Fliehkraftabscheidereinheit nach Patentanspruch 1, **dadurch gekennzeichnet, dass** das erste Paar einander gegenüberliegender Wandabschnitte und das zweite Paar einander gegenüberliegender Wandabschnitte eine zweite Krümmung (23) umfassen und dass der Abstand zwischen der ersten und der zweiten Krümmung (22; 23) im ersten Paar einander gegenüberliegender Wandabschnitte (20.11, 20.12) länger ist als der Abstand zwischen den ersten und zweiten Krümmungen im zweiten Paar einander gegenüberliegender Wandabschnitte (20.21, 20.22).

5. Fliehkraftabscheidereinheit nach Patentanspruch 1, **dadurch gekennzeichnet, dass** jeder Wandabschnitt eine konstante Breite (W) über die Länge der Abscheiderkammer aufweist.

6. Fliehkraftabscheidereinheit nach Patentanspruch 1, **dadurch gekennzeichnet, dass** sich das erste Paar einander gegenüberliegender Wandabschnitte (20.11, 20.12) in sich verjüngender Richtung in den Bereich zwischen dem zweiten Paar einander gegenüberliegender Wandabschnitte (20.21, 20.22) erstreckt.

7. Fliehkraftabscheidereinheit nach Patentanspruch 1, **dadurch gekennzeichnet, dass** die Wandabschnitte des ersten Paares von Wandabschnitten (20.11, 20.12) mit symmetrischen ersten Krümmungen vorgesehen sind.

8. Fliehkraftabscheidereinheit nach einem der vorhergehenden Patentansprüche, **dadurch gekennzeichnet, dass** die Wandabschnitte im Wesentlichen gleichmäßig beabstandete Rohre (25) umfassen zur Bereitstellung einer Wärmeträgerströmung durch die Wandabschnitte im Einsatz.

9. Fliehkraftabscheidereinheit nach Patentanspruch 1, **dadurch gekennzeichnet, dass** alle Wandabschnitte (20.11, 20.12; 20.21, 20.22; 20.31, 20.32; 20.41, 20.42) die gleiche Breite (W) haben.

10. Fliehkraftabscheidereinheit nach Patentanspruch 1, **dadurch gekennzeichnet, dass** im Ablaufkanal (52) die Kanten (24) des ersten Paars von Wandabschnitten im Wesentlich gasdicht mit der Oberfläche (26) des zweiten Paars von Wandabschnitten verbunden sind.

11. Fliehkraftabscheidereinheit nach Patentanspruch 1, **dadurch gekennzeichnet, dass** sich die erste Krümmung (22) in jedem Wandabschnitt in derselben Ebene befindet.

12. Fliehkraftabscheidereinheit nach Patentanspruch 1 oder 2, **dadurch gekennzeichnet, dass** das erste Paar einander gegenüberliegender Wandabschnitte und das zweite Paar einander gegenüberliegender Wandabschnitte eine zweite Krümmung (23) umfassen und dass die Wandabschnitte vor der ersten Krümmung und nach der zweiten Krümmung parallel sind.

## Revendications

1. Ensemble séparateur centrifuge (10) comportant une chambre de séparation polygonale (15) formée de sections de parois planes raccordées les unes aux autres afin de fournir une structure essentiellement étanche aux gaz et possédant quatre paires de sections de paroi planes opposées (20.11 , 20.12 ; 20.21, 20.22 ; 20.31, 20.32 ; 20.41, 20.42), la chambre comportant une partie de forme conique (50) constituée de façon à présenter une première pliure vers l'intérieur (22) dans chacune des sections de paroi, la partie de forme conique se prolongeant sous la forme d'un conduit d'évacuation (52) destiné aux particules séparées à partir de la chambre de séparation (15), lequel conduit d'évacuation est formé au moyen des première et deuxième paires de sections de paroi opposées (20.11, 20.12 ; 20.21, 20.22) qui sont perpendiculaires l'une à l'autre, **caractérisé en ce que** dans le conduit d'évacuation (52) destiné aux particules séparées la première paire de sections de paroi (20.11, 20.12) s'étend dans la zone entre la deuxième paire de sections de paroi (20.21, 20.22).

2. Ensemble séparateur centrifuge (10) selon la revendication 1, **caractérisé en ce que** la distance comprise entre la première paire de sections de paroi opposées (20.11, 20.12) dans la zone du conduit d'évacuation est plus petite que la largeur de la deuxième paire de sections de paroi opposées (20.21, 20.22).

3. Ensemble séparateur centrifuge (10) selon la revendication 1, **caractérisé en ce qu'**un dispositif d'étanchéité au gaz (60) et des moyens permettant d'introduire un gaz de fluidisation (65) sont prévus en liaison avec une section inférieure de la première paire de sections de paroi opposées (20.11, 20.12).

4. Ensemble séparateur centrifuge selon la revendication 1, **caractérisé en ce que** la première paire de sections de paroi opposées et la deuxième paire de sections de paroi opposées comportent une seconde pliure (23) et **en ce que** la distance entre la première et la seconde pliures (22 ; 23) dans la première paire de sections de paroi (20.11, 2.-12) est plus longue que la distance entre la première et la seconde pliures dans la seconde paire de sections de paroi (20.21, 20.22).

5. Ensemble séparateur centrifuge selon la revendication 1, **caractérisé en ce que** chaque section de paroi présente une largeur constante (W) sur la longueur de la chambre de séparation.

6. Ensemble séparateur centrifuge selon la revendication 1, **caractérisé en ce que** la première paire de sections de paroi (20.11, 20.12) s'étend dans la direction de la conicité dans la zone comprise entre la deuxième paire de sections de paroi (20.21, 20.22).

7. Ensemble séparateur centrifuge selon la revendication 1, **caractérisé en ce que** les sections de paroi de la première paire de sections de paroi (20.11, 20.12) sont dotées de premières pliures symétriques.

8. Ensemble séparateur centrifuge selon l'une quelconque des revendications précédentes, **caractérisé en ce que** les sections de paroi comportent des tubes espacés de façon essentiellement régulière (25) pour organiser le flux du milieu servant au transfert de chaleur à travers les sections de paroi lors du fonctionnement.

9. Ensemble séparateur centrifuge selon la revendication 1, **caractérisé en ce que** toutes les sections de paroi (20.11, 20.12 ; 20.21, 20.22 ; 20.31, 20.31 ; 20.41, 20.42) sont d'une largeur égale (W).

10. Ensemble séparateur centrifuge selon la revendication 1, **caractérisé en ce que** dans le conduit d'évacuation (52) les bords (24) de la première paire de sections de paroi sont raccordés de façon à être essentiellement étanches aux gaz à la surface (26) de la deuxième paire de sections de paroi.

11. Ensemble séparateur centrifuge selon la revendication 1, **caractérisé en ce que** la première pliure (22) de chaque section de paroi se trouve sur le même plan.

12. Ensemble séparateur centrifuge selon la revendication 1 ou 2, **caractérisé en ce que** la première paire de sections de paroi opposées et la deuxième paire de sections de paroi opposées comportent une seconde pliure (23) et **en ce que** les sections de paroi avant la première pliure et après la seconde pliure sont parallèles.
